# EUROPEAN PATENT APPLICATION

(11) **EP 4 825 285 A1**
(43) Date of publication of application: **21.10.2026**
(21) Application number: 26172220.1
(22) Date of filing: 14.04.2026
(51) Int. Cl.: A47J 43/07, A47J 43/042, A47J 43/27, A47J 43/046

(54) **ALTERNATIVE MILK MAKER PERSONAL BLENDER JAR ASSEMBLY**

(30) Priority: 14.04.2025 US 202519177729
(71) Applicant: Whirlpool Corporation, Benton Harbor, MI 49022 (US)
(72) Inventor: GIVENS, Layna Simone, Benton Harbor, MI, 49022 (US); EVERIDGE, Jacob W., Benton Harbor, MI, 49022 (US)
(74) Representative: Witte, Weller & Partner Patentanwälte mbB

(57) **Abstract**

A blender jar assembly for blending and filtering an alternative to milk. The blender jar assembly has an elongated mesh filter that presses and separates the fluid from the blended raw ingredients. The filter is coupled to a lid so that the filtered fluid can be poured from the blender jar assembly.

## Description

### BACKGROUND OF THE DISCLOSURE

The present disclosure generally relates to a blender jar for a personal blender, and more specifically, to a blender jar used for making milk alternatives. Milk alternatives can be made from a variety of raw materials. This typically involves use of a blender to blend the raw material and then to filter the resultant blended solution with cheesecloth or another filter. Thus, there is a need for a faster and simpler way to make a milk alternative.

### SUMMARY OF THE DISCLOSURE

According to one aspect of the present disclosure, is a blender jar assembly. The blender jar has a cavity defined by a solid lower surface and sidewalls. The blender jar also has an upper threaded surface. A lid with a threaded surface couples to the upper threaded surface of the blender jar. An elongated mesh filter extends from the bottom of the lid into the cavity when the lid is coupled to the blender jar. An opening is in an upper surface of the lid to permit pouring of the filtered contents of the blender jar assembly.

According to another aspect of the present disclosure, is a filter member for a blender jar assembly. The blender jar has a cavity defined by a solid lower surface and sidewalls. An elongated mesh filter extends from the bottom of a lid into the cavity when the lid is coupled to the blender jar. An opening is in an upper surface of the lid to permit pouring of the filtered contents of the blender jar assembly.

According to yet another aspect of the present disclosure, is a blender jar assembly. The blender jar has a cavity defined by a solid lower surface and sidewalls. The blender jar also has an upper threaded surface. A blade attachment includes an internal threaded surface for coupling to the blender jar. A lid includes a threaded surface that couples to the upper threaded surface of the blender jar when the blade attachment is removed from the blender jar. An elongated mesh filter extends from the bottom of the lid into the cavity when the lid is coupled to the blender jar. An opening is in an upper surface of the lid to permit pouring of the filtered contents of the blender jar assembly.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front view of a personal blender jar assembly with a filter member;
FIG. 2 is a front perspective view of the lid and the filter member shown in FIG. 1;
FIG. 3 is a front perspective view of a personal blender jar assembly with a blade attachment before and after raw materials are blended;
FIG. 4 is a front perspective view of the removal of the blade attachment and the coupling of the lid and filter member to the personal blender jar assembly after the raw materials were blended, as shown in FIG. 3; and
FIG. 5 is a front perspective view of the pouring of the filtered milk alternative into a cup.

The components in the figures are not necessarily to scale, emphasis instead being placed upon illustrating the principles described herein.

### DETAILED DESCRIPTION

The present illustrated embodiments reside primarily in combinations of method steps and apparatus components related to a personal blender jar for making a milk. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

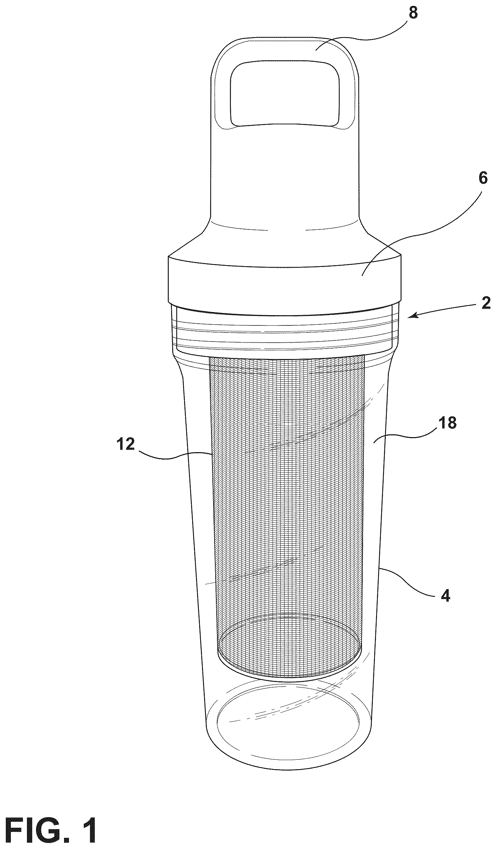

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

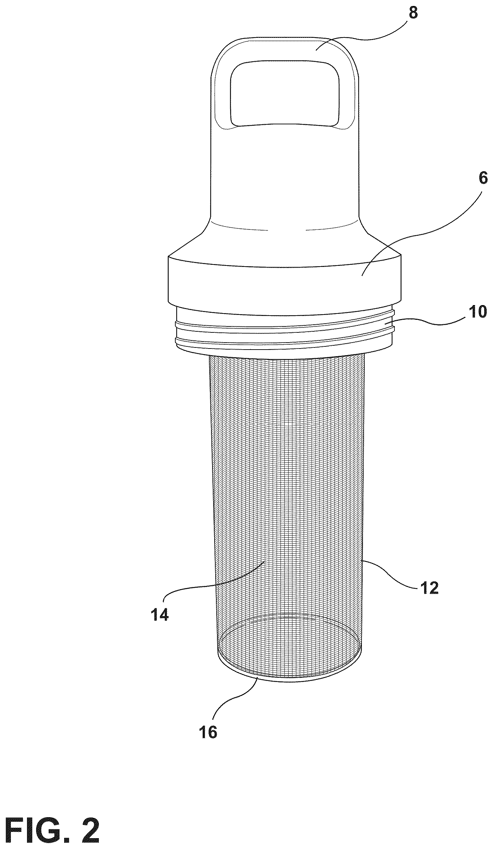

Referring to FIGS. 1-5, reference numeral 2 refers to a blender jar assembly. The blender jar assembly 2 includes a blender jar 4 with a cavity 18. The illustrated blender jar 4 has a threaded surface that couples to a threaded surface of the blade attachment 20 or to the threaded surface 10 of a lid 6.

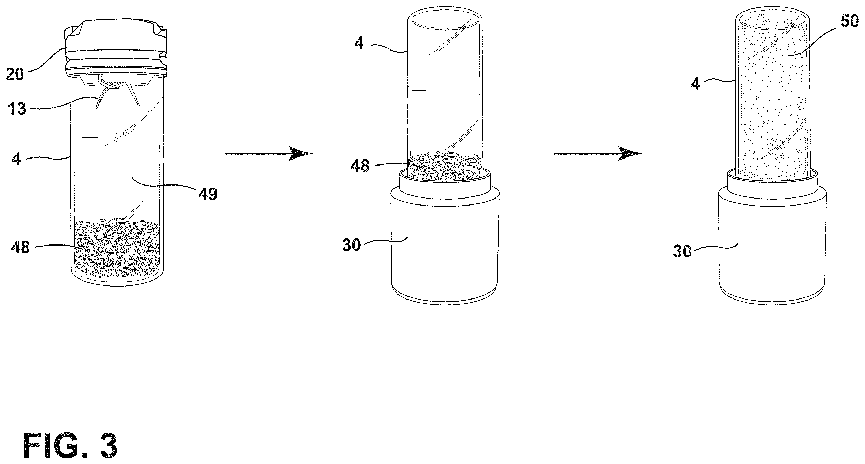

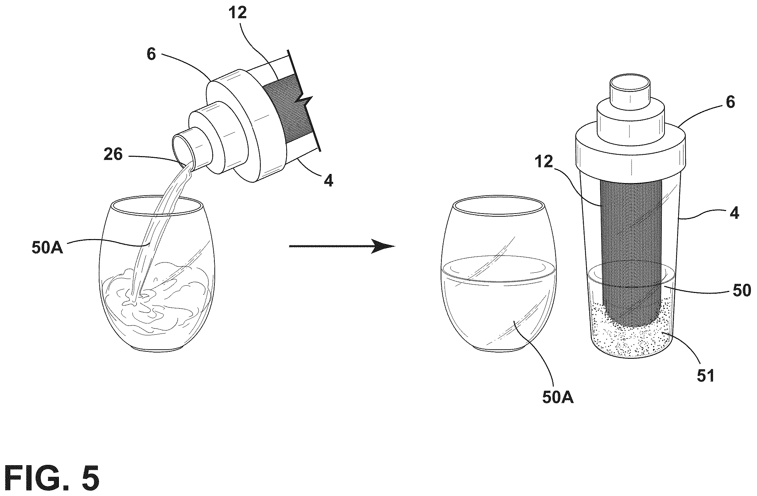

The blender jar assembly 2 can be used to create a milk alternative 50A (FIG. 5) from blended raw material 50. The blended raw material 50 is made by blending a raw material 48 using a motor 30. The motor rotates blades 13 to blend the raw material 48 that is within the blender jar 4, as illustrated in FIG. 3. The raw material 48 can include liquid 49 before blending. The raw material 48 could be any type of material, including, but not limited to, nuts, vegetables, fruits, seeds, etc.

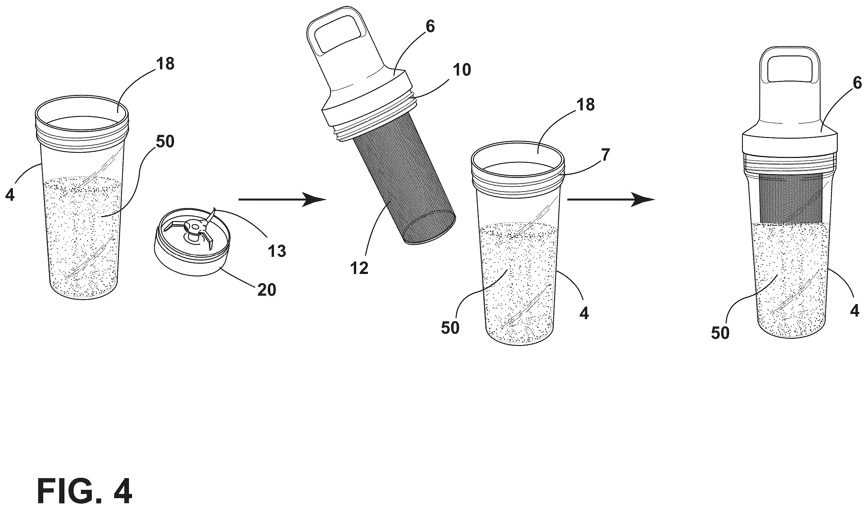

Once the blended raw material 50 is created, the blade attachment 20 is removed from the blender jar 4 and the lid 6 is coupled to the blender jar 4 as illustrated in FIG. 4. The lid 6 has a filter member 12 that can be permanently or releasably coupled to the lid 6. For example, the filter member 12 can be integrally formed into the lid 6 by heat staking, welding, or other manner of permanent coupling. The filter member 12 can also be removably coupled to the lid 6 by threaded engagement, press fitting, compression, or other manner of releasable coupling. Moreover, a surface of the filter member 12 can be positioned in between a surface of the lid 6 and a surface of the blender jar 4. The filter member 12 is also illustrated as being generally cylindrical with a sidewall 14 and bottom wall 16. The filter member 12 is illustrated as being made of mesh. The mesh may have a size of 250 to 400 microns, and preferably around 330 microns. The filter member 12 can include one or more non-mesh support arms on the cylindrical sidewall 14. A support ring can also be used on the bottom wall 16. The support arms and/or support ring can provide structural rigidity to generally maintain the cylindrical shape of the filter member 12. While the illustrated embodiment shows the filter member 12 with a cylindrical shape, the filter member 12 could have other shapes, including, but not limited to, a conical shape, a hexagonal shape, a tapered shape, etc. Moreover, while the blender jar 4 is shown as having a generally conical shape, the blender jar 4 could have other shapes.

The filter member 12 is positioned inside the blender jar 4 cavity 18 in order to filter the blended raw material 50. The milk alternative 50A passes into the inside of the filter member 12 while the larger particles, like pulp, are trapped between the filter member 12 and the blender jar 4. The large surface area of the mesh of the filter member 12 permits a greater yield of milk alternative 50A. Moreover, the relatively large size of The filter member 12 allows it to press the blended raw material 50 against the sides and bottom of the blender jar 4 in order to use mechanical force to extract the milk alternative 50A from the blended raw material 50. In the illustrated embodiment, the filter member 12 extends close to the sides and bottom of the blender jar 4. In this arrangement, the volume of the cavity 18 that exists between the outer diameter and bottom of the filter member 12 is less than 25% of the volume of the cavity 18. In order words, the internal volume of the mesh filter member 12 is at least 75% percent of the internal volume of the cavity 18 when said lid 6 is coupled to said blender jar 4.

The lid 6 can include a handle 8. The lid 6 could also include an opening 26 that permits filtered milk alternative 50A to be poured out of the blender jar 4, while the larger material/pulp 51 remains in the blender jar 4.

According to another aspect of the present disclosure is a blender jar assembly. The blender jar having a cavity defined by a solid lower surface and sidewalls. The blender jar including an upper threaded surface. A lid having a threaded surface that couples to said upper threaded surface of said blender jar and an elongated mesh filter that extends from the bottom of said lid into said cavity when said lid is coupled to said blender jar. An opening is in an upper surface of said lid.

According to another aspect, wherein said elongated mesh filter has generally cylindrical mesh sidewalls and a bottom mesh wall.

According to another aspect, the blender jar assembly includes at least one supporting arm on said generally cylindrical mesh sidewalls.

According to another aspect, the blender jar assembly includes a supporting ring on said bottom mesh wall.

According to another aspect, wherein said supporting arm and said supporting ring are connected.

According to another aspect, the blender jar includes a removable cover surrounding said opening.

According to another aspect, wherein the internal volume of said elongated mesh filter is at least 75% of the internal volume of said cavity of said blender jar.

According to yet another aspect, a filter member for a blender jar assembly, comprising a blender jar having a cavity defined by a solid lower surface and sidewalls. An elongated mesh filter extends from the bottom of a lid into said cavity when said lid is coupled to said blender jar. An opening is in an upper surface of said lid.

According to another aspect, wherein said elongated mesh filter has generally cylindrical mesh sidewalls and a bottom mesh wall.

According to another aspect, the blender jar assembly including at least one supporting arm on said generally cylindrical mesh sidewalls.

According to another aspect, the blender jar assembly including a supporting ring on said bottom mesh wall.

According to another aspect, wherein said supporting arm and said supporting ring are connected.

According to another aspect, the blender jar assembly including a removable cover surrounding said opening.

According to another aspect, wherein the internal volume of said elongated mesh filter is at least 75% of the internal volume of said cavity of said blender jar.

According to yet another aspect, a blender jar assembly, comprising a blender jar having a cavity defined by a solid lower surface and sidewalls. The blender jar including an upper threaded surface. A blade attachment includes an internal threaded surface for coupling to said blender jar. A lid having a threaded surface couples to said upper threaded surface of said blender jar when said blade attachment is removed from said blender jar. An elongated mesh filter extends from the bottom of said lid into said cavity when said lid is coupled to said blender jar. An opening is in an upper surface of said lid.

According to another aspect, wherein said elongated mesh filter has generally cylindrical mesh sidewalls and a bottom mesh wall.

According to another aspect, the blender jar assembly including at least one supporting arm on said generally cylindrical mesh sidewalls.

According to another aspect, the blender jar assembly including a supporting ring on said bottom mesh wall.

According to another aspect, wherein said supporting arm and said supporting ring are connected.

According to another aspect, wherein the internal volume of said elongated mesh filter is at least 75% of the internal volume of said cavity of said blender jar.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A blender jar assembly, comprising:
a blender jar having a cavity defined by a solid lower surface and sidewalls, said blender jar including an upper threaded surface;
a lid having a threaded surface that couples to said upper threaded surface of said blender jar and an elongated mesh filter that extends from the bottom of said lid into said cavity when said lid is coupled to said blender jar; and
an opening in an upper surface of said lid.

2. The blender jar assembly of claim 1, wherein said elongated mesh filter has generally cylindrical mesh sidewalls and a bottom mesh wall.

3. The blender jar assembly of claim 2, including at least one supporting arm on said generally cylindrical mesh sidewalls.

4. The blender jar assembly of any one of claims 2 and 3, including a supporting ring on said bottom mesh wall.

5. The blender jar assembly of claim 4, wherein said supporting arm and said supporting ring are connected.

6. The blender jar assembly of any one of claim 1, 2, 3, 4, and 5, including a removable cover surrounding said opening.

7. The blender jar assembly of any one of claim 1, 2, 3, 4, 5, and 6, wherein the internal volume of said elongated mesh filter is at least 75% of the internal volume of said cavity of said blender jar.

8. The blender jar assembly of any one of claims 1, 2, 3, 4, 5, 6, and 7, including a blade attachment having an internal threaded surface for coupling to said blender jar.

9. The blender jar assembly of any one of claims 1, 2, 3, 4, 5, 6, 7, and 8 including a handle.

10. The blender jar assembly of claim 9, wherein said handle is a separate component that is coupled to said lid.

11. The blender jar assembly of claim 9, wherein said handle is integrally formed on a part of said lid.

12. The blender jar assembly of any one of claims 1, 2, 3, 4, 5, 6, 7, 8, 9, 10, and 11 wherein said opening is positioned in the center of the upper surface of said lid.

13. The blender jar assembly of any one of claims 1, 2, 3, 4, 5, 6, 7, 8, 9, 10, 11, and 12 wherein said mesh filter has openings having a size of 250 to 400 microns.

14. The blender jar assembly of any one of claims, 1, 2, 3, 4, 5, 6, 7, 8, 9, 10, 11, 12, and 13 wherein said mesh filter has openings having a size of approximately 330 microns.

15. The blender jar assembly of any one of the proceeding claims wherein said blender jar has a conical shape.
